# EUROPÄISCHE PATENTSCHRIFT

(11) **EP 3 238 833 B1**
(45) Veröffentlichungstag und Bekanntmachung des Hinweises auf die Patenterteilung: **23.09.2020**
(21) Anmeldenummer: 16167720.8
(22) Anmeldetag: 29.04.2016
(51) Int. Cl.: B05B 7/24, A01M 7/00, A01G 25/09, A01C 23/04, B05B 12/12, B05B 13/00, B05B 15/55, B05B 15/531

(54) **SPRÜHVORRICHTUNG FÜR EINEN SPRÜHROBOTER UND SPRÜHROBOTER**
SPRAY DEVICE FOR A SPRAY ROBOT AND SPRAY ROBOT
DISPOSITIF DE PULVERISATION POUR UN ROBOT ET ROBOT DE PULVERISATION

(43) Veröffentlichungstag der Anmeldung: 01.11.2017
(73) Patentinhaber: Menno Chemie-Vertrieb GmbH, 22850 Norderstedt (DE)
(72) Erfinder: Nevermann, Jan, 22397 Hamburg (DE)
(74) Vertreter: Becker & Kurig Partnerschaft Patentanwälte PartmbB

(56) Entgegenhaltungen:
- EP-B1- 2 476 481
- DE-A1- 19 727 528
- GB-A- 2 213 031
- US-A- 5 433 380

## Beschreibung

### Gebiet der Erfindung

Die vorliegende Erfindung betrifft eine Sprühvorrichtung für einen Sprühroboter und einen entsprechenden Sprühroboter. Insbesondere betrifft die vorliegende Erfindung eine Sprühvorrichtung und einen Sprühroboter zum Aufbringen von flüssigen Insektiziden oder Pflanzenschutz-, Dünge- oder Desinfektionsmittellösungen auf land- oder gartenwirtschaftliche Nutzflächen oder Nutzpflanzen, wie z.B. Acker- oder Gewächshausflächen, Gewächshauspflanzen, Weinstöcke, Obstbäume oder Ackerbaupflanzen. Gewächshausflächen bzw. Gewächshauspflanzen sind ein besonders bevorzugtes Verwendungsgebiet der Erfindung.

Dokument GB 2 213 031 A offenbart eine Sprühvorrichtung zum Aufbringen von Pestiziden.

### Technischer Hintergrund

Moderne Pflanzenkulturen, z.B. in Gewächshäusern benötigen zum Erreichen des optimalen Ertrags eine Vielzahl von Pflegemaßnahmen. Dies betrifft herkömmliche Kulturen genauso wie nachhaltige bzw. Biokulturen. Eine Vielzahl von möglichen Mitteln wird dabei bevorzugt in Form von wässrigen Lösungen auf die Pflanze oder die direkte Umgebung der Pflanze gesprüht.

Herkömmlicherweise werden beim Einsatz von solchen Pflanzenschutzmittel, Bioziden und/oder chemischer Substanzen bzw. Gemischen stationäre oder mobilen Tankmischbehälter durch die Lösung darin kontaminiert und müssen nachgereinigt werden, damit Rückstände des zuvor eingesetzten Präparates nicht in andere Kulturen gelangen, für die sie nicht bestimmt bzw. zugelassen sind, und um antagonistische Effekte und/oder negative Beeinträchtigungen später in dem Tank anzusetzender Mischungen auszuschließen sind.

Diese Nachreinigung der Tankmischbehälter ist jedoch aufwendig und teilweise kompliziert. Beim Pflanzenschutzspritzen im Freilandbereich muss die Reinigung durch gesetzliche Vorgaben gefordert auf den behandelten Freiflächen erfolgen, um Punkteinträge durch Waschvorgänge auf geschlossenen Arbeitsflächen des Betriebs zu vermeiden. Das Waschwasser darf nicht in Oberflächengewässer oder ein Abwassersiel in die Umwelt eingetragen werden.

Die Vorgaben sind in Europa rechtlich zwingend. Insbesondere ist der Tank nach der Applikation derartiger Präparate mit kleinen mitzuführenden Frischwassermengen unter Zusatz geeigneter Reinigungsmittel auszuspülen und nach zu waschen. Sowohl Pumpen als auch mittelführende Leitungen und Spritzgestänge sind von vorherigen "Kontaminationen" frei zu machen, die Waschspüllösung muss auf der zuvor behandelten Fläche, z.B. im Verhältnisbereich von 1:2 bis 1:100, bevorzugt 1:5 bis 1:50 und am bevorzugtesten vom 1:8 bis 1:20, verteilt werden.

Diese Vorgehensweise ist im agrarwirtschaftlichen Bereich auf Ackerflächen gegebenenfalls noch möglich aber umständlich und zeitaufwendig. Auf geschlossenen Anwendungsflächen im Gartenbau oder geschützten Unter-Glass Anbauflächen z.B. Gewächshäusern ist diese Handhabe aber nicht ohne weiteres durchführbar.

Das Reinigen von stationären oder mobilen Tankmischbehältern ist in den zuvor genannten europäischen rechtlichen Bestimmungen reglementiert. Die Waschwasserlösung darf nicht dem Abwasser zugeführt werden, darf nicht in Oberflächengewässer gelangen und darf auch nicht auf landwirtschaftlichen Flächen verbracht werden, weil die Anwendung der Präparate in den meisten Indikationen lediglich zur Applikation auf den geschlossenen Anwendungsflächen oder geschützten Unter-Glass Anbauflächen limitiert ist. Eine Ausbringung wäre somit potentiell eine unzulässige Kontamination und könnte rechtliche Bestimmungen verletzen.

Derzeit werden in der Landwirtschaft, der Agrarwirtschaft und dem Gartenbau diverse Pflanzenschutzmittelspritzen und Gerätschaften zur Applikation von Bioziden und/oder chemischer Substanzen bzw. Gemischen in stationären oder mobilen Tankmischbehältern eingesetzt die alle dieser Problematik unterzogen sind.

### Kurze Beschreibung der Erfindung

Diese rechtliche Problematik einerseits und der Schutz der Umwelt und natürlicher Ressourcen (z.B. Wasser) andererseits machen einen neuen technischen Lösungsansatz wünschenswert.

So ist es erstrebenswert eine neue, rückstandssubstituierende Technik zu entwickeln, bei deren Anwendung von Pflanzenschutzmitteln, Bioziden und Chemikalien eine mitgeführte Dosier- oder Fördertechnik an mobilen Geräten/Fahrzeugen eine Vermeidung von Tankvormischungen rückstandsrelevanter Pflanzenschutzmittel und/oder chemischer Substanzen bzw. Gemischen in stationären oder mobilen Tankmischbehältern erreicht, so dass deren anschließende Nachreinigung vermieden werden kann und keine rückstandsbelasteten Waschwasser freigesetzt und in die Umwelt entlassen werden.

Die vorliegende Erfindung wird demnach in den beigefügten Ansprüchen bereitgestellt.

Die Erfindung stellt eine Sprühvorrichtung für einen Sprühroboter zum Aufbringen von flüssigen Insektiziden oder Pflanzenschutz-, Dünge- oder Desinfektionsmittellösungen bereit, umfassend mindestens eine Sprühdüse, einen Wasserversorgungsanschluss, eine Dosiervorrichtung und mindestens einen Wirkstofftank. Der Wasserversorgungsanschluss ist über eine erste Fluidleitung mit der Sprühdüse verbunden. Die Dosiervorrichtung ist angepasst, um einen Wirkstoff an einem Mischpunkt in die erste Fluidleitung abzugeben. Der mindestens eine Wirkstofftank ist über eine zweite Fluidleitung mit der Dosiervorrichtung verbunden, wobei die erste Fluidleitung vom Mischpunkt direkt zu der Sprühdüse verläuft. Mit "direkt" ist hier gemeint, dass zwischen dem Mischpunkt und der Düse keine Aufbewahrung des Wirkstoffgemischs vorgesehen ist. Die im Mischpunkt erzeugte Lösung wird direkt durch die Düsen aufgebracht.

In der vorliegenden Erfindung umfasst die Sprühvorrichtung einen Druckluftversorgungsanschluss, der angepasst ist, um Druckluft für pneumatisch angesteuerte Elemente der Sprühvorrichtung und/oder zur Erzeugung von Schaum und/oder Sprays in Zweistoffdüsen bereitzustellen. Optional kann die Druckluft durch einen durch den Sprühroboter mitgeführten Druckluftbehälter oder eine Druckluftleitung bereitgestellt werden.

In einer Ausführungsform der vorliegenden Erfindung umfasst die Sprühdüse eine Aufschäumvorrichtung, die mit dem Druckluftversorgungsanschluss und der ersten Fluidleitung verbunden ist und die angepasst ist, um ein Fluid in aus der ersten Fluidleitung aufzuschäumen, wobei die Sprühdüse angepasst ist den erzeugten Schaum gleichmäßig zu verteilen. Einige Beispiele für den Aufbau und die Funktionsweise der Aufschäumvorrichtung sind in dem Europäischen Patent EP 2476481 B1 ausführlich beschrieben.

In einer Ausführungsform der vorliegenden Erfindung umfasst die Dosiervorrichtung eine Dosierpumpe. Die Dosierpumpe kann pneumatisch, z.B. durch den oben beschriebenen Druckluftanschluss, elektrisch, über einen Verbrennungsmotor des Sprühroboters oder einen stationären Verbrennungsmotor, der eine Batterie und/oder einen Elektromotor des Sprühroboters versorgt, angetrieben werden. Geeignete Batterien, wie etwa Li-Ionen Akkumulatoren, Blei-Akkus, oder Elektromotoren können je nach Ausführungsform auch durch Solarzellen oder eine Windkraftanlage des Roboters oder, durch ein Kabel angebunden, in der näheren Umgebung des Roboters mit Strom versorgt werden. Solche Anordnungen dienen dazu den Sprühroboter möglichst autark arbeiten zu lassen, z.B. als selbstfahrenden Sprüh- oder Gießwagen.

In einer Ausführungsform der vorliegenden Erfindung ist der Wirkstofftank lösbar in der Sprühvorrichtung eingebunden, so dass der Wirkstofftank entfernt oder ausgetauscht werden kann. Auf diese Weise können mehrere unterschiedliche befüllte Wirkstofftanks je nach Anwendung in die Sprühvorrichtung eingebunden werden. Somit wird eine möglichst hohe Flexibilität erreicht und unterschiedliche Wirkstoffgemische können Bedarfsweise direkt in der Vorrichtung (am Mischpunkt) kombiniert werden. Die Lösbarkeit kann durch übliche bekannte Mechanismen gewährleistet werden, z.B. Gurte, Klippverschlüsse, Klettverschlüsse, Schnallen, Schrauben, Bolzen/Mutter-Verbindungen, Aufsteckverbindungen (z.B. in vorgeformte Aushöhlungen der Vorrichtung), etc.

In einer Ausführungsform der vorliegenden Erfindung umfasst die Sprühvorrichtung zusätzlich einen Abwassertank, der mit einem Reinigungsventil der Sprühdüse verbunden ist. Die Sprühdüse ist angepasst, um in einem Reinigungsmodus über das Reinigungsventil gespült zu werden und das Reinigungsabwasser in dem Abwassertank gesammelt wird. In der Praxis kann so automatisch (z.B. nach jedem abgeschlossenen Sprühvorgang) oder durch externe Einstellung/Steuerung ein Reinigungsmodus aktiviert werden. In diesem Modus ist die Dosiervorrichtung inaktiv, so dass nur reines Wasser vom Wasserversorgungsanschluss durch den Abschnitt zwischen Mischpunkt und Düse und die Düse selbst strömt, diese spült und somit reinigt. Im Reinigungsmodus ist der übliche Düsenausgang verschlossen (z.B. pneumatisch, über Entsperrung eines Rückschlagventils oder durch einen kleinen Elektromotor) und die Reinigungsflüssigkeit strömt über ein Reinigungsventil, das wiederrum im normalen Sprühmodus verschlossen ist (z.B. pneumatisch, über Sperrung eines Rückschlagventils oder durch einen kleinen Elektromotor), aus der Düse in den Abwassertank.

Die vorliegende Erfindung stellt einen Sprühroboter zum Aufbringen von flüssigen Insektiziden oder Pflanzenschutz-, Dünge- oder Desinfektionsmittellösungen bereit, umfassend wenigstens eine Sprühvorrichtung gemäß einer der vorstehenden Ausführungsformen, ein Antriebssystem und eine Steuerung, die das Antriebssystem und die Sprühvorrichtung des Sprühroboters steuert. Der Ausdruck Sprühroboter ist im Zusammenhang mit der vorliegenden Erfindung breit auszulegen. So sind etwa auch Gießwagen mit einer erfindungsgemäßen Sprühvorrichtung, die Mittel über eine breite Fläche mittels mehrerer Düsen ausbringen, oder andere mobile Geräte im Bedeutungsumfang des Begriffs "Sprühroboter" hierin enthalten. Das Antriebssystem kann gemäß der vorliegenden Erfindung demnach Teile des Roboters, z.B. einen beweglichen Sprüharm oder die Sprühdüse(n) selbst antreiben und/oder den Roboter selbst, z.B. über angetriebene Räder, bewegen.

Eine denkbare Anwendung sind z.B. auch autark arbeitende Drohnen oder Flugroboter mit kleinen mitgeführten Wasser- und Wirkstoffmengen und einer erfindungsgemäßen Sprühvorrichtung, die über Kamerasensoren punktuell befallene Flächen oder Pflanzen bzw. Pflanzenteile aus der Luft erkennen und direkt behandeln. Solche Drohnen können sich an Docking-Stationen selbstständig mit Strom bzw. Brennstoff, Wasser, Wirkstoffkonzentrat und/oder ggf. tauschbaren Modulen für unterschiedliche Anwendungszwecke versorgen.

Andere Ausführungen für mögliche Sprühroboter gemäß der vorliegenden Erfindung umfassen selbstfahrende oder ferngesteuerte Zugmaschinen, die direkt oder über einen Anbau mit einer erfindungsgemäßen Sprühvorrichtung ausgestattet sind. Bei der Behandlung von großlandwirtschaftlichen Nutzflächen wird bevorzugt ein Frischwasservorrat mitgeführt. Auch wenn bevorzugt fahrbare Sprühroboter beschrieben werden, sind in der vorliegenden Erfindung auch fixierte Applikationssysteme in der Bedeutung des Begriffs "Roboter" enthalten, wobei mobile Tischsysteme und/oder Kulturen in Töpfen und/oder Behältern und/oder Kisten auf Förderbändern und/oder anderer Fördertechniken wie z. B. wasserführenden Rinnen-und/oder Kanalsystemen zugeführt und behandelt werden.

In einer Ausführungsform der vorliegenden Erfindung steuert die Steuerung gemäß vorbestimmten Daten und anhand von Sensorinformationen aus Sensoren in der Umgebung und/oder Sensoren des Sprühroboters. Die Steuerung ist z.B. ein kleiner Rechner, auf dem eine Software läuft, der die Sensorinformationen empfängt, verarbeitet und entsprechend in Steuerungsbefehle an das Antriebssystem und die Sprühvorrichtung umwandelt. Geeignete Sensoren sind z.B. ein GPS-Sensor oder eine ähnlicher Positionssensor, Kameras, Ultraschallsensoren, ein Kompass, Lichtsensoren, usw. Die vorbestimmten Daten sind einerseits die programmieren Parameter, die den Ablauf und den Rhythmus der Sprühvorgänge bestimmen (z.B. welcher Tank, in welcher Konzentration, auf welche Pflanzen, um welche Zeit etc.), zum anderen die Umweltparameter, die die Bewegung des Sprühroboters einschränken (Wände, Pflanzen, Leitungen etc.).

In der vorliegenden Erfindung umfasst der Sprühroboter wenigstens eine Schlauchaufnahmevorrichtung, die einen Wasserversorgungs- und/oder Druckluftversorgungsschlauch aufnimmt. Die Schlauchaufnahmevorrichtung kann in einer Ausführungsform einen Antriebsmechanismus aufweisen, der durch die Steuerung gesteuert wird, so dass anhand von Positions- und Bewegungsinformationen Schlauch automatisch auf- und abgewickelt wird. Diese bietet im Vergleich zum klassischen Auf- und Abrollmechanismus gegen den Widerstand einer Feder den Vorteil, dass die Leitungen nicht mehr nachgezogen werden und die Gefahren z.B. Gegenstände umzureißen oder Pflanzen mit dem durch die Feder vorgespannten Schlauch zu beschädigen, werden durch den Antriebsmechanismus der Schlauchaufnahmevorrichtung verringert.

In einer Ausführungsform der vorliegenden Erfindung umfasst das Antriebssystem einen Elektromotor und eine Stromversorgung (z.B. ein Stromkabel, das wie der beschriebene Wasserschlauch gehandhabt wird, einen Akkumulator, eine Batterie, einen kleinen Generator und/oder eine Solarzelle), einen Verbrennungsmotor, oder einen pneumatisch angetriebenen Motor.

In einer Ausführungsform der vorliegenden Erfindung umfasst der Sprühroboter einen GPS-Sensor zur Erfassung eines Ortes des Sprühroboters, wobei die Steuerung mit einem Speichermedium verbunden ist, auf dem die Sprühvorgänge bezüglich Ort, Zeit, Wirkstoffmenge und gegebenenfalls Einwirkzeit dokumentiert werden.

In einer Ausführungsform der vorliegenden Erfindung ist die Steuerung angepasst, um durch eine externe Konsole ferngesteuert bzw. programmiert zu werden. Auf diese Weise kann ein einzelner Fachmann mehrere möglicherweise weit entfernt stationierte Sprühroboter überwachen und/oder steuern. Personal vor Ort kann weiter reduziert werden, vor allem, wenn der Sprühroboter in eine Andockstation zurückkehren kann, wenn z.B. der Akku wieder aufgeladen werden muss oder Wirkstofftanks ausgetauscht oder nachgefüllt werden müssen. Bis auf möglicherweise auftretende Störungen und routinemäßige Wartungen kann der Roboter theoretisch eigenständig arbeiten.

In einer Ausführungsform der vorliegenden Erfindung umfasst die Steuerung ein Funkkommunikationsmodul und ist die Steuerung über eine Funkverbindung mit dem Speichermedium und/oder der externen Konsole verbunden. Über die Funkverbindung können so Behandlungsvorgänge direkt extern dokumentiert werden.

In einer Ausführungsform der vorliegenden Erfindung umfasst der Sprühroboter außerdem einen Wassertank und/oder eine Wasserpumpe, die angepasst ist, um Wasser aus dem Wassertank in den Wasserversorgungsanschluss der wenigstens einen Sprühvorrichtung zu speisen. Somit kann der Sprühroboter auch alle nötigen Ressourcen mitführen und benötig in einigen Ausführungsformen überhaupt keine Kabel- oder Schlauchanschlüsse.

In einer Ausführungsform der vorliegenden Erfindung ist die Sprühdüse bewegbar oder verschiebbar/schwenkbar an dem Sprühroboter bzw. an der Sprühvorrichtung befestigt. Dadurch können die Höhe und der Winkel der Sprühdüse entweder von Hand, ferngesteuert über eine Konsole oder automatisch gemäß dem vorliegenden Sprühauftrag angepasst werden. Z.B. sind Düngemittel und Herbizide normalerweise nur im Bodenbereich der behandelten Fläche erwünscht wohingegen Fungizide oder Insektizide oftmals auf die Blätter aufgetragen werden müssen, die je nach Pflanzenart und Wachstumsstatus in unterschiedlichen Höhen wachsen. Zur automatischen Erfassung der notwendigen Höhe/des notwendigen Winkels kann der Sprühroboter in einer Ausführungsform über die bereits oben beschriebenen Sensordaten verfügen und so die Parameter ermitteln, die zur richtigen Einstellung notwendig sind, z.B. Lasersensoren oder eine Kamera mit angebundener Bildauswertungssoftware (z.B. in der Steuerung des Sprühroboters).

### Kurze Beschreibung der Zeichnungen

Fig. 1 ist eine schematische Darstellung einer Sprühvorrichtung gemäß einer Ausführungsform der vorliegenden Erfindung.
Fig. 2 ist eine schematische Seitenansicht eines Sprühroboters gemäß einer Ausführungsform der vorliegenden Erfindung.
Fig. 3 ist eine Frontansicht einer Ausführungsform eines Sprühroboters der vorliegenden Erfindung als Gießwagen.
Fig. 4 ist eine schematische Ansicht eines Sprühroboters von oben gemäß einer weiteren Ausführungsform der vorliegenden Erfindung.

### Beschreibung der Ausführungsformen der Erfindung

Die Erfindung wird nun anhand der beigefügten Zeichnungen beschrieben. Wo immer zweckdienlich wurden gleiche Bezugszeichen für gleiche oder ähnliche Bauteile verwendet.

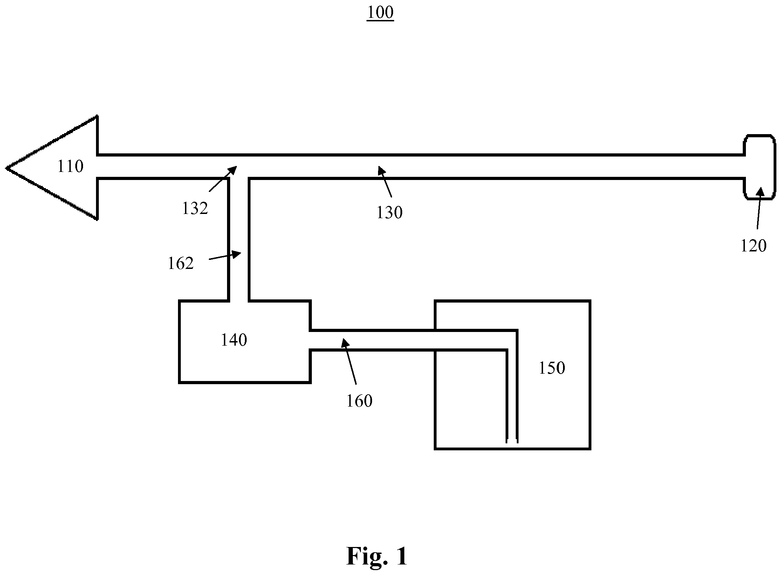

Fig. 1 ist eine schematische Darstellung einer Sprühvorrichtung 100 gemäß einer Ausführungsform der vorliegenden Erfindung. Die Sprühvorrichtung 100 ist insbesondere für einen Sprühroboter zum Aufbringen von flüssigen Insektiziden oder Pflanzenschutz-, Dünge- oder Desinfektionsmittellösungen geeignet und umfasst mindestens eine Sprühdüse 110, einen Wasserversorgungsanschluss 120, eine Dosiervorrichtung 140 und mindestens einen Wirkstofftank 150. Der Wasserversorgungsanschluss 120 ist über eine erste Fluidleitung 130 mit der Sprühdüse 110 verbunden. Die Dosiervorrichtung 140 ist angepasst, um einen Wirkstoff an einem Mischpunkt 132 in die erste Fluidleitung 130 abzugeben. Der mindestens eine Wirkstofftank 150 ist über eine zweite Fluidleitung 160 mit der Dosiervorrichtung 140 verbunden, wobei die erste Fluidleitung 130 vom Mischpunkt 132 direkt zu der Sprühdüse 110 verläuft.

Bei den Leitungen 130 und 160 handelt es sich normalerweise um Schläuche, die geeignet sind, um den eingesetzten Chemikalien zu widerstehen. Außerdem ist eine hohe UV-Resistenz wünschenswert, da z.B. Gewächshäuser als ein möglicher Einsatzort eine hohe Lichtbelastung vorweisen.

Die einzelnen Verbindungen zwischen den Elementen 110, 120, 130, 132, 140, 150 und 160 sind als durchgehende Öffnungen dargestellt. Jedoch wird der Fachmann hier natürlich je nach Bedarf Ventile, Filter, Düsen etc. vorsehen, um den gewünschten Effekt zu maximieren und Störungen der Vorrichtung zu vermeiden. So ist an der Verbindung zwischen Leitung 162 der Dosiervorrichtung mit der ersten Fluidleitung 130 am Mischpunkt 132 bevorzugt eine Düse oder ähnliches vorgesehen, um einen möglichst gut verteilte, gleichmäßige Einmischung des Wirkstoffs in das Wasser in Fluidleitung 130 zu gewährleisten. Durch entsprechende Ausbildung dieser Düse kann auch ein Zugeffekt des Wassers in der Leitung 130 genutzt werden, um Wirkstoff anzuziehen und besser einzumischen (Effekt der Wasserstrahlpumpe). In einer Ausführungsform kann die Dosiervorrichtung an sich auch durch eine bewegliche Düse in dem Mischpunkt 132 bereitgestellt werden, wobei die Dosierung durch eine Öffnung oder ein Schließen einer Düsenöffnung einen stärkeren/schwächeren Strahlpumpeneffekt erzeugt.

Leitung 160 weist in der Fig. 1 eine optionale Verlängerung auf, die bis zum Boden des Wirkstofftanks 150 reicht. Somit kann das Wirkstofffluid nahezu vollständig aus dem Wirkstofftank 150 entnommen werden. Die Düse 110 kann, wie oben beschrieben, eine Aufschäumvorrichtung (nicht gezeigt) umfassen, die eine geeignete Wirkstofflösung aufschäumt.

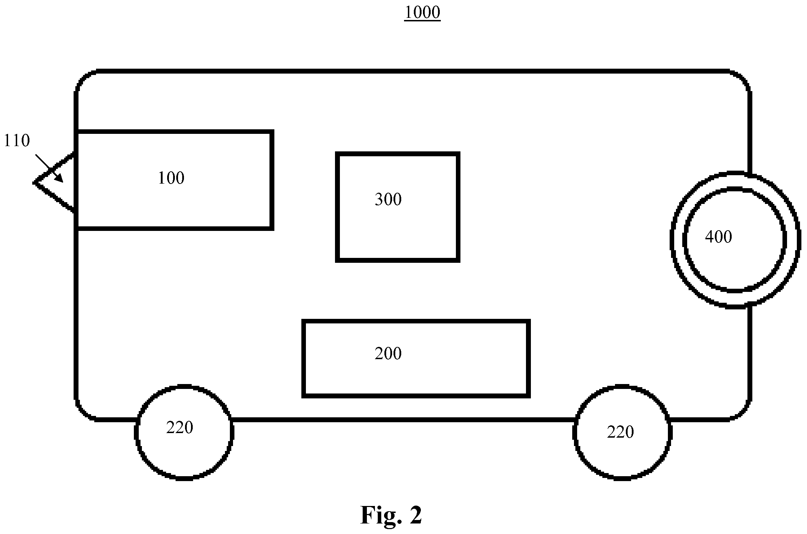

Fig. 2 ist eine schematische Seitenansicht eines Sprühroboters 1000 gemäß einer Ausführungsform der vorliegenden Erfindung. In Fig. 2 ist ein Sprühroboter 1000 zum Aufbringen von flüssigen Insektiziden oder Pflanzenschutz-, Dünge- oder Desinfektionsmittellösungen der Erfindung gezeigt, der wenigstens eine Sprühvorrichtung 100 gemäß der vorstehenden Beschreibung, ein Antriebssystem 200 und eine Steuerung 300, die das Antriebssystem 200 und die Sprühvorrichtung 100 des Sprühroboters 1000 steuert, umfasst. Die Fig. 2 zeigt zudem eine Schlauchaufnahmevorrichtung 400, wie sie oben bereits beschrieben wurde.

Wie oben beschrieben wurde, umfasst das Antriebssystem 200 einen Antrieb, z.B. einen Motor (nicht gezeigt), und Räder oder Laufrollen 220, von denen zumindest eines/eine durch den Antrieb 200 angetrieben wird. Zur Steuerung des Roboters durch die Steuerung 300 ist wenigstens eine Antriebsachse der Räder/Laufrollen 220 schwenkbar und/oder die Räder/Laufrollen 220 selbst schwenkbar gelagert. Durch einen geeigneten Mechanismus, z.B. einen zusätzlichen Elektromotor (nicht gezeigt) steuert die die Steuerung 300 die Drehung der Räder/Laufrollen 220 bzw. deren Achse. Der Antrieb 200 kann außerdem weitere Teile des Sprühroboters 1000 bzw. der Sprühvorrichtung 100 antreiben, z.B. die Dosiervorrichtung, die Schlauchaufnahmevorrichtung 400 oder eine Wasserpumpe (nicht gezeigt), wie sie oben exemplarisch beschrieben wurde.

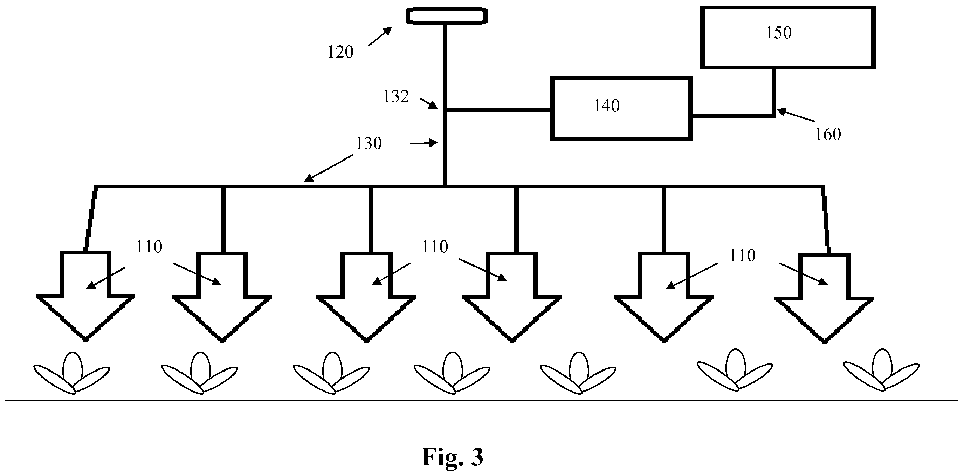

Fig. 3 ist eine Frontansicht einer Ausführungsform eines Sprühroboters der vorliegenden Erfindung als Gießwagen. Der Sprühroboter in Fig. 3 enthält alle wesentlichen Merkmale des Sprühroboters aus Fig. 2, auch wenn z.B. Antrieb 200 und Steuerung 300 in Fig. 3 nicht explizit dargestellt sind. In einem Gewächshaus kann ein Gießwagen aus Fig. 2 über ein nicht dargestelltes Deckenschienensystem gehalten und geführt werden. Die optional vorhandenen Versorgungsschläuche für Wasser und/oder Druckluft werden bevorzugt auch über die Decke geführt (nicht gezeigt).

Besonders an der Ausführungsform in Fig. 3 ist, dass die Leitung 130 nach dem Mischpunkt 132 verzweigt ist und zu vertikal aufgehängten Düsen 110 führt, über die die Wirkstofflösung auf die zu behandelnde Fläche ausgebracht wird.

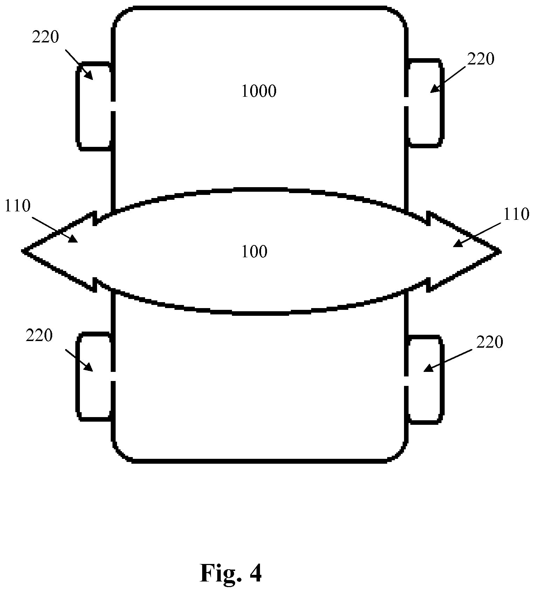

Fig. 4 ist eine schematische Ansicht eines Sprühroboters von oben gemäß einer weiteren Ausführungsform der vorliegenden Erfindung. Die Ausführungsform der Fig. 4 entspricht im Wesentlichen der der Fig. 2. Jedoch ist in Fig. 4 eine Sprühvorrichtung mit zwei Düsen 110 gezeigt, die auf gegenüberliegenden Seiten des Sprühroboters aus der Sprühvorrichtung 100 hervorstehen. Mit dieser Konstruktion ist eine gleichzeitige Behandlung von Pflanzen o.Ä. auf beiden Seiten des Sprühroboters 1000 möglich, etwa wenn der Roboter 1000 zwischen Reihen von zu behandelnden Pflanzen fährt.

### Beispiel

Ein praktisches Beispiel für die vorliegende Erfindung wird im Folgenden beschrieben. Die vorliegende Erfindung kann demnach für die nächtliche Applikation von Insektiziden verwendet werden, deren Anwendung sonst tagsüber Nützlinge wie Bienen oder Hummeln beeinträchtigen könnte. Hummeln sind für die Bestäubung der Blüten zwingend notwendig.

Nachts kehren die Hummeln in die Nester zurück die dann zeitgesteuert verschlossen werden können, um sicher zu stellen dass die Hummeln nicht von den Insektiziden Anwendungen beeinträchtigt werden.

Dazu ist es erforderlich, dass zeitlich begrenzt wirksame Insektizide zur Anwendung kommen, wozu sich ganz besonders natürliches Pyrethrum die sogenannten Phyrethrine eignen. Nach dem Hummel- und/oder Bienenflug und deren Rückkehr in deren Nester bzw. Stöcke werden zeitgesteuerte Spritzroboter gemäß der vorliegenden Erfindung eingesetzt, um die Insektizide zu applizieren.

Der Vorteil von natürlichem Pyrethrum bzw. den sogenannten Phyrethrinen besteht darin, dass sie bei Sonneneinstrahlung kurzfristig zerfallen. Nach dem Sonnenaufgang kann nach der nötigen Karenzzeit der Ausflug der Nützlinge, z.B. Hummeln und/oder Bienen über die Zeitsteuerung wieder freigegeben werden und sie können die Kulturen unbeeinträchtigt durch das Insektizid bestäuben.

Die Luftdruckunterstützte Applikation von wässrigen insektiziden Lösungen stellt eine bessere Gleichverteilung der Tröpfchengröße sicher und gewährleistet eine gleichförmige Verteilung des Spritz-/Sprühnebelbildes in die blättrigen bzw. belaubten Kulturen und/oder Gräser in allen Vegetationsphasen, um auch deren Unterseiten gleichmäßig mit Wirkstoffmengen zu belegen. Eine nächtliche Anwendung wäre nur durch Angestellte wegen hoher Arbeitskosten kaum möglich. Die vorliegende Erfindung erleichtert demnach auch die Anwendung in dem aufgeführten Beispiel, zusätzlich zu den Vorteilen der Mischung der Wirkstofflösung in der Vorrichtung selbst (siehe oben).

## Patentansprüche

1. Sprühroboter (1000) zum Aufbringen von flüssigen Insektiziden oder Pflanzenschutz- , Dünge-, Reinigungs- oder Desinfektionsmittellösungen, umfassend:
wenigstens eine Sprühvorrichtung (100), umfassend:
mindestens eine Sprühdüse (110);
einen Wasserversorgungsanschluss (120), der über eine erste Fluidleitung mit der Sprühdüse (110) verbunden ist;
eine Dosiervorrichtung (140), die angepasst ist, um einen Wirkstoff an einem Mischpunkt (132) in die erste Fluidleitung abzugeben; und
mindestens einen Wirkstofftank, der über eine zweite Fluidleitung mit der Dosiervorrichtung (140) verbunden ist, wobei die erste Fluidleitung vom Mischpunkt (132) direkt zu der Sprühdüse (110) verläuft;
ein Antriebssystem (200); und
eine Steuerung (300), die das Antriebssystem (200) und die Sprühvorrichtung (100) steuert, wobei es sich um einen fahrbaren Sprühroboter (1000) handelt, der weiterhin wenigstens eine Schlauchaufnahmevorrichtung umfasst, die einen Wasserversorgungs- und/oder Druckluftversorgungsschlauch aufnimmt.

2. Sprühroboter (1000) gemäß Anspruch 1, weiterhin umfassend einen Druckluftversorgungsanschluss, der angepasst ist, um Druckluft für pneumatisch angesteuerte Elemente der Sprühvorrichtung (100) und/oder zur Erzeugung von Schaum und/oder zur Erzeugung von Sprays mit Zweistoffdüsen bereitzustellen.

3. Sprühroboter (1000) gemäß Anspruch 2, wobei die Sprühdüse (110) eine Aufschäumvorrichtung umfasst, die mit dem Druckluftversorgungsanschluss und der ersten Fluidleitung verbunden ist und die angepasst ist, um ein Fluid aus der ersten Fluidleitung aufzuschäumen, wobei die Sprühdüse (110) angepasst ist den erzeugten Schaum gleichmäßig zu verteilen.

4. Sprühroboter (1000) gemäß einem der vorstehenden Ansprüche, wobei die Dosiervorrichtung (140) eine Dosierpumpe umfasst.

5. Sprühroboter (1000) gemäß einem der vorstehenden Ansprüche, wobei der Wirkstofftank lösbar in der Sprühvorrichtung (100) eingebunden ist, so dass der Wirkstofftank entfernt oder ausgetauscht werden kann.

6. Sprühroboter (1000) gemäß einem der vorstehenden Ansprüche, weiterhin umfassend einen Abwassertank, der mit einem Reinigungsventil der Sprühdüse (110) verbunden ist, wobei die Sprühdüse (110) angepasst ist, um in einem Reinigungsmodus über das Reinigungsventil gespült zu werden und das Reinigungsabwasser in dem Abwassertank gesammelt wird.

7. Sprühroboter (1000) gemäß einem der vorstehenden Ansprüche, wobei die Steuerung (300) gemäß vorbestimmten Daten und anhand von Sensorinformationen aus Sensoren in der Umgebung und/oder Sensoren des Sprühroboters (1000) steuert.

8. Sprühroboter (1000) gemäß einem der vorstehenden Ansprüche, wobei die Schlauchaufnahmevorrichtung einen Antriebsmechanismus aufweist, der durch die Steuerung gesteuert wird, so dass anhand von Positions- und Bewegungsinformationen Schlauch automatisch auf- und abgewickelt werden kann.

9. Sprühroboter (1000) gemäß einem der vorstehenden Ansprüche, wobei das Antriebssystem (200) einen Elektromotor und eine Stromversorgung, einen Benzinmotor, oder einen pneumatisch angetriebenen Motor umfasst.

10. Sprühroboter (1000) gemäß einem der vorstehenden Ansprüche, weiterhin umfassend einen GPS-Sensor zur Erfassung eines Ortes des Sprühroboters (1000), wobei die Steuerung (300) mit einem Speichermedium verbunden ist, auf dem die Sprühvorgänge bezüglich Ort, Zeit, Wirkstoffmenge und gegebenenfalls Einwirkzeit dokumentiert werden.

11. Sprühroboter (1000) gemäß einem der vorstehenden Ansprüche, wobei die Steuerung (300) angepasst ist, um durch eine externe Konsole ferngesteuert bzw. programmiert zu werden.

12. Sprühroboter (1000) gemäß einem der Ansprüche 10 und 11, wobei die Steuerung (300) ein Funkkommunikationsmodul umfasst und die Steuerung (300) über eine Funkverbindung mit dem Speichermedium und/oder der externen Konsole verbunden ist.

13. Sprühroboter (1000) gemäß einem der vorstehenden Ansprüche, weiterhin umfassend einen Wassertank und eine Wasserpumpe, die angepasst ist, um Wasser aus dem Wassertank in den Wasserversorgungsanschluss (120) der wenigstens einen Sprühvorrichtung (100) zu speisen.

14. Sprühroboter (1000) gemäß einem der vorstehenden Ansprüche, wobei der Sprühroboter (1000) angepasst ist, um über ein Deckenschienensystem gehalten und geführt zu werden.

15. Sprühroboter (1000) gemäß einem der vorstehenden Ansprüche, wobei die Dosiervorrichtung (140) der Sprühvorrichtung (100) und/oder eine Wasserpumpe des Sprühroboters (1000) jeweils pneumatisch und/oder elektrisch betrieben sind.

## Claims

1. Spraying robot (1000) for applying fluid insecticides or pesticide, fertilizer, cleaner or disinfectant solutions, comprising:
at least one spraying device (100), comprising:
at least one spray nozzle (110);
a water supply port (120) connected to the spray nozzle (110) via a first fluid line;
a metering device (140) adapted to dispense an active agent into the first fluid line at a mixing point (132); and
at least one active agent tank which is connected to the metering device (140) via a second fluid line, the first fluid line running from the mixing point (132) directly to the spray nozzle (110);
a drive system (200); and
a control system (300) that controls the drive system (200) and the spraying device (100), wherein the spraying robot (1000) is a mobile spraying robot (1000) that further comprises at least one hose container device that receives a water supply and/or compressed air supply hose.

2. Spraying robot (1000) according to claim 1, further comprising a compressed air supply port adapted to provide compressed air for pneumatically controlled elements of the spraying device (100) and/or for the generation of foam and/or for the generation of sprays with two-component nozzles.

3. Spraying robot (1000) according to claim 2, wherein the spraying nozzle (110) comprises a foaming device which is connected to the compressed air supply port and the first fluid line and which is adapted to foam a fluid from the first fluid line, wherein the spraying nozzle (110) is adapted to evenly distribute the foam produced.

4. Spraying robot (1000) according to anyone of the preceding claims, wherein the metering device (140) comprises a metering pump.

5. Spraying robot (1000) according to anyone of the preceding claims, wherein the active agent tank is detachably integrated in the spraying device (100) so that the active agent tank can be removed or replaced.

6. Spraying robot (1000) according to anyone of the preceding claims, further comprising a waste water tank connected to a cleaning valve of the spraying nozzle (110), wherein the spraying nozzle (110) is adapted to be flushed via the cleaning valve in a cleaning mode and the cleaning waste water is collected in the waste water tank.

7. Spraying robot (1000) according to anyone of the preceding claims, wherein the controller (300) controls according to predetermined data and sensor information from sensors in the environment and/or sensors of the spraying robot (1000).

8. Spraying robot (1000) according to anyone of the preceding claims, wherein the hose container device has a drive mechanism controlled by the controller so that a hose can be automatically wound and unwound based on position and movement information.

9. Spraying robot (1000) according to anyone of the preceding claims, wherein the drive system (200) comprises an electric motor and a power supply, a gasoline engine, or a pneumatically driven motor.

10. Spraying robot (1000) according to anyone of the preceding claims, further comprising a GPS sensor for detecting a location of the spraying robot (1000), wherein the control system (300) is connected to a storage medium on which the spraying processes are documented with respect to location, time, amount of active agent and, if applicable, exposure time.

11. Spraying robot (1000) according to anyone of the preceding claims, wherein the control system (300) is adapted to be remotely controlled or programmed by an external console.

12. Spraying robot (1000) according to anyone of the claims 10 and 11, wherein the control system (300) comprises a wireless communication module and the control system (300) is connected to the storage medium and/or the external console via a wireless link.

13. Spraying robot (1000) according to anyone of the preceding claims, further comprising a water tank and a water pump adapted to supply water from the water tank to the water supply port (120) of the at least one spraying device (100).

14. Spraying robot (1000) according to anyone of the preceding claims, wherein the spraying robot (1000) is adapted to be supported and guided by a ceiling rail system.

15. Spraying robot (1000) according to anyone of the preceding claims, wherein the dosing device (140) of the spraying device (100) and/or a water pump of the spraying robot (1000) are respectively pneumatically and/or electrically operated.

## Revendications

1. Robot de pulvérisation (1000), destiné à appliquer des insecticides ou des solutions d'agents phytosanitaires, de fertilisants, d'agents nettoyants ou de désinfectants, comprenant :
au moins un dispositif de pulvérisation (100), comprenant :
au moins une buse de pulvérisation (110) ;
un branchement d'alimentation d'eau (120), qui par l'intermédiaire d'un premier conduit de fluide est relié avec la buse de pulvérisation (110) ;
un dispositif de dosage (140), qui est adapté pour délivrer un principe actif à un point de mélange (132) dans le premier conduit de fluide ; et
au moins un réservoir de principe actif, qui par l'intermédiaire d'un deuxième conduit de fluide est relié avec le dispositif de dosage (140), le premier conduit de fluide s'écoulant à partir du point de mélange (132) directement vers la buse de pulvérisation (110) ;
un système d'entraînement (200) ; et
un système de commande (300), qui commande le système d'entraînement (200) et le dispositif de pulvérisation (100), s'agissant d'un robot de pulvérisation (1000) déplaçable, qui comprend par ailleurs au moins un dispositif récepteur de flexible, qui réceptionne un flexible d'alimentation d'eau et/ou un flexible d'alimentation d'air comprimé.

2. Robot de pulvérisation (1000) selon la revendication 1, comprenant par ailleurs un branchement d'alimentation d'air comprimé, qui est adapté pour mettre à disposition de l'air comprimé pour des éléments à actionnement pneumatique du dispositif de pulvérisation (100) et/ou pour générer de la mousse et/ou pour générer des sprays équipés de buses à deux matières.

3. Robot de pulvérisation (1000) selon la revendication 2, la buse de pulvérisation (110) comprenant un dispositif de moussage, qui est relié avec le branchement d'alimentation d'air comprimé et avec le premier conduit de fluide et qui est adapté pour faire mousser un fluide hors du premier conduit de fluide, la buse de pulvérisation (110) étant adaptée pour distribuer régulièrement la mousse générée.

4. Robot de pulvérisation (1000) selon l'une quelconque des revendications précédentes, le dispositif de dosage (140) comprenant une pompe de dosage.

5. Robot de pulvérisation (1000) selon l'une quelconque des revendications précédentes, le réservoir de principe actif étant incorporé de manière amovible dans le dispositif de pulvérisation (100), de telle sorte que le réservoir de principe actif puisse être retiré ou remplacé.

6. Robot de pulvérisation (1000) selon l'une quelconque des revendications précédentes, comprenant par ailleurs un réservoir d'eaux usées, qui est relié avec une soupape de nettoyage de la buse de pulvérisation (110), la buse de pulvérisation (110) étant adaptée pour être rincée via la soupape de nettoyage dans un mode de nettoyage et l'eau de nettoyage étant collectée dans le réservoir d'eaux usées.

7. Robot de pulvérisation (1000) selon l'une quelconque des revendications précédentes, le système de commande (300) commandant selon des données prédéfinies et à l'aide d'informations captées par des capteurs dans l'environnement et/ou des capteurs du robot de pulvérisation (1000).

8. Robot de pulvérisation (1000) selon l'une quelconque des revendications précédentes, le dispositif récepteur de flexible comportant un mécanisme d'entraînement qui est commandé par le système de commande, de sorte qu'à l'aide d'informations de position et de déplacement, du flexible puisse être automatiquement enroulé et déroulé.

9. Robot de pulvérisation (1000) selon l'une quelconque des revendications précédentes, le système d'entraînement (200) comprenant un moteur électrique et une alimentation électrique, un moteur à essence, ou un moteur à entraînement pneumatique.

10. Robot de pulvérisation (1000) selon l'une quelconque des revendications précédentes, comprenant par ailleurs un capteur GPS, destiné à détecter un lieu où se trouve le robot de pulvérisation (1000), le système de commande (300) étant relié avec un support de mémoire qui documente les opérations de pulvérisation au niveau de leur lieu, de leur heure, de la quantité de principe actif et le cas échéant, du temps d'action.

11. Robot de pulvérisation (1000) selon l'une quelconque des revendications précédentes, le système de commande (300) étant adapté pour être télécommandé ou programmé par une console externe.

12. Robot de pulvérisation (1000) selon l'une quelconque des revendications 10 et 11, le système de commande (300) comprenant un module de communication radio et le système de commande (300) étant relié via une liaison radio avec le support de mémoire et/ou avec la console externe.

13. Robot de pulvérisation (1000) selon l'une quelconque des revendications précédentes, comprenant par ailleurs un réservoir d'eau et une pompe à eau, qui est adaptée pour alimenter de l'eau à partir du réservoir à eau dans le branchement d'alimentation d'eau (120) de l'au moins un dispositif de pulvérisation (100).

14. Robot de pulvérisation (1000) selon l'une quelconque des revendications précédentes, le robot de pulvérisation (1000) étant adapté pour être maintenu et guidé via un système de rails au plafond.

15. Robot de pulvérisation (1000) selon l'une quelconque des revendications précédentes, le dispositif de dosage (140) du dispositif de pulvérisation (100) et/ou une pompe à eau du robot de pulvérisation (1000) étant respectivement à fonctionnement pneumatique et/ou électrique.
